# EUROPEAN PATENT APPLICATION

(11) **EP 1 057 503 A1**
(43) Date of publication of application: **06.12.2000**
(21) Application number: 99921316.8
(22) Date of filing: 29.04.1999
(51) Int. Cl.: A63F 3/08, A63F 3/06, B64G 9/00

(54) **METHOD FOR PLAYING A SPACE GAME AND DEVICES FOR REALISING THIS METHOD**

(30) Priority: 21.12.1998 RU 98122646; 19.02.1999 RU 99102988
(71) Applicant: Safronov, Sergei Mikhailovich, Moscow, 119263 (RU)
(72) Inventor: SAFRONOV, Sergei Mikhailovich, Moscow, 119263 (RU); ZAITSEV, Evgeny Alexandrovich, Moscow, 121248 (RU); MELNIKOV, Alexei Jurievich, Moskovskaya obl., 143952 (RU); KONSTANTINOV, Jury Fedorovich, Moscow, 119120 (RU); REZNIKOV, Alexandr Evgenievich, Moskovskaya obl., 142092 (RU); STAROSTIN, Stanislav Vasilievich, Moscow, 117607 (RU)
(74) Representative: Kador & Partner
(86) International application number: RU9900144
(87) International publication number: WO0037152

(57) **Abstract**

The present invention relates to a method for playing a game that involves placing bets on the registration of a game event performed by game members (1) capable of spatial displacement. The performance of the game event is registered using a technical system (2) and according to the spatial distribution of the mobile game members (1) relative to at least one system (3) which is used for estimating the game event and which is located in the same space. The game members (1) and the system (3) are not located on the Earth but in outer space, while the registration by the technical system (2) of the performance of the game event is carried out on the Earth. In a first embodiment of the device, the games consist of races. The game members (1) consist of spacecraft, while the system (3) is a naturally occurring object and the technical system sets the process of the game not on the Earth but in outer space and ensures the representation thereof on the Earth. According to a secondembodiment of this device, the game members (1) consist of spacecraft, while the system (3) consist of one of said spacecraft or of a space debris. According to another embodiment of said device, the game members (1) consists of mobile objects moving at random in the outer space, while the system (3) consists of the outer surface of a spacecraft and the technical system (2) is arranged on the outer surface of the spacecraft.

## Description

### Technical Field

The present invention relates to a method for playing mass games and devices for realising the method which may be employed in educating and improving games, as well as in conducting quizes, lotteries, contests for guessing the results of lottery, totalizator, races, games of lotto, etc.

### Background of the Invention

Disclosed by Alan Wikes in Encyclopedia of Games of Chance, EFRAT Publishers, 1994, Ch.4, is a method for conducting a game including accepting bets on a registration of a game event performed by game elements which are capable of moving in space, registering a game event occurrence using a facility by a spatial position of the game elements relative to at least one game event assessment means located in the same space, and allotting a payoff.

This totalizator-like method of conducting a game involves conducting by game organizers a competition among movable game elements, wherein every participant makes, prior to the game, at least one bet on one of the competing game elements, and the game organizers allot payoffs to the game participants based on the game outcome taking into account the bets made.

The game elements may be racing automobiles, for example, in Formula-1 type races, horses, for example, in derby, horserace, etc. The game event assessment means may be winning posts, while the game event registration facility may be a photofinish to detect the fact of race termination, devices for determining the finish time, and apparatuses for registering the start time and breakaway, facts of keeping or breaking the rules at the path, etc.

The race organizers and participants specify a competition track, install track boundary restricting means, provide observation places for spectators to watch the race progress, provide, on the track, a facility to register the race outcome which is predicted by the spectators, distribute specially prepared tickets, collect, using dedicated means, the forecasts made by the spectators, and then conduct the competition either before the spectators, or the spectators can be placed in viewing rooms at locations remote from the racing place, or the competitions and the race outcome are displayed using television. The results of the forecasts made by the spectators/participants are determined on the basis of the race outcome. The forecast results of all spectators are compared and the payoffs to the spectators which have made minimum errors in the race outcome forecasts are determined.

An apparatus for implementing the prior art method respectively comprises game elements capable of moving in space, game event assessment means for assessing a spatial position of the game elements relative to the means, located in the same space, and a game event occurrence registration facility (Alan Wikes, Encyclopedia of Games of Chance, EFRAT Publishers, 1994, Ch.4).

Disadvantages of the game include: the presence of human factor which affects the competition results; the possibility of unfairness and conspiracy among the competitors; intervention of a third party to the competition results, for instance, of people preparing horses or vehicle before the race start; the high probability of determining the race outcome and good forecastability of the game event occurrence because the race outcome is essentially defined by the fact how a horse or automobile is prepared to the competition, as well as by the skill of a horse or automobile racer. Therefore, in automobile or horse races a totalizator fails to completely ensure that the results obtained at the game event occurrence will be unbiased and the outcome of the game event occurrence will be entirely accidental and fair. These limitations result in the reduced excitement and interest of the spectators in the game as a whole.

US Patent No. 5,011,157 teaches a method for conducting a mass game including accepting bets on a registration of a game event performed by game elements which are capable of moving in space, registering a game event occurrence using a facility by a spatial position of the game elements relative to at least one game event assessment means disposed in the same space, and allotting the payoff.

According to this game method, a surface is divided into game fields, and the game elements hit the fields in accidental fashion. The game event assessment means are marks on the fields, the facility being a device for detecting and displaying a game field hit by a game element. Thus, the prior art method is free of human factor.

An apparatus for implementing the above method includes game elements capable of randomly moving in space, game event assessment means for assessing a spatial position of the game elements on its surface divided into game fields, and game event occurrence registration means (US Patent No. 5,011,157).

Despite the absence of human influence on the game outcome, the problems with the prior art game is that the accidental character of hitting the game fields by the game elements may be reduced as the result of various failures in randomness of the game element motion. For instance, there are widely known cases of roulette deformation, and, as a consequence, intentional use of the roulette deformation by certain game participants in order to obtain the gain. Therefore, a roulette or another man-made random number generator does not completely ensure that the results obtained will be fair, absolutely accidental and unpredictable.

### SUMMARY OF THE INVENTION

It is an object of the present invention to provide a method for playing game and devices for realising this method, wherein game elements, game event assessment means and facilities are configured and disposed so that to extend the range of equipment and its abilities in conducting the game, to improve reliability of the game by the reduction in predictability of the game event occurrence results, and, thus, to enhance entertainment and interest of spectators/participants in game. One embodiment of the invention also provides the possibility to clear cosmic space of space waste.

The above object is accomplished by a method for playing mass game, including the steps of: accepting bets on a registration of a game event performed by game elements which are capable of moving in space; registering a game event occurrence using a facility by a spatial position of the movable game elements relative to at least one game event assessment means located in the same space, and allotting a payoff, wherein in accordance with the invention the game elements and the game event assessment means are disposed in cosmic space outside the Earth, said registering of the game event occurrence by a facility being effected on the Earth.

In an embodiment of the game method, the game elements are space vehicles having various technical characteristics.

This embodiment includes further embodiments of method, wherein:
said registering of a game event occurrence is effected by a space vehicle which is the fastest to reach the position of the game event assessment means;
the game event assessment means may be a technogenic object relating to space waste which is captured on reaching its position;
said registering of a game event occurrence is effected by a space vehicle which has gone the longest distance to the game event assessment means;
said registering of a game event occurrence is effected by a space vehicle which has gone at the shortest distance from the game event assessment means;
the game event assessment means may be one of the solar system planets;
the game event assessment means may be a space vehicle launched to cosmic space prior to said accepting bets on a registration of a game event.

In another embodiment of the method for playing a game, the game event assessment means may be an external surface of a space vehicle divided into game fields, the game elements being movable objects which are randomly moving in cosmic space, and said registering of a game event occurrence being effected when a movable object hits a game field.

The above embodiment includes further embodiments wherein:
the movable objects may be meteorite particles;
the movable objects may be particles of technogenic origin, such as space waste.

The object of the invention is also attained in a devices for conducting a game, comprising game elements capable of moving in space; game event assessment means for assessing a spatial position of game elements relative to said means, disposed in the same space, and a game event occurrence registration facility, wherein in accordance with the present invention the game elements and the game event assessment means are located in cosmic space, the game elements being space vehicles, the game event assessment means being an object of natural origin, and the game event occurrence registration facility being adapted to detect a game event occurrence in cosmic space outside the Earth and display the same on the Earth.

The object of the invention is further attained in a devices for conducting a game, comprising game elements capable of moving in space, game event assessment means for assessing a spatial position of game elements relative to said means, located in the same space, and a game event occurrence registration facility, wherein in accordance with the present invention the game elements and the game event assessment means are located in cosmic space, the game elements being space vehicles, the game event assessment means being a technogenic object, and the game event occurrence registration facility being adapted to detect a game event occurrence in cosmic space outside the Earth and display the same on the Earth.

In further embodiments of the devices :
the technogenic object may be a space vehicle;
the technogenic object may be space waste, the game element being provided with means for capturing the space waste.

The object of the invention is also attained by a devices for conducting a game, comprising game elements capable of randomly moving in space, game event assessment means for assessing a spatial position of the game elements on a surface of the game event assessment means divided into game fields, and a game event occurrence registration facility for registering a game event occurrence, such as hitting a game field by a game element, wherein in accordance with the present invention the game elements and the game event assessment means are located in cosmic space, the game elements being movable objects which are randomly moving in cosmic space, the game event assessment means being an external surface of a space vehicle, the game event occurrence registration facility being mounted on an external surface of the space vehicle and adapted to detect a game event occurrence in cosmic space outside the Earth and transmit game event occurrence data to the Earth.

The location of the game elements and the game event assessment means in cosmic space and the availability of the facility for registration a game event occurrence in cosmic space and providing game event occurrence data to the Earth extends the range of game facilities and reduces predictability of the game event occurrence results.

The above advantages and the other features of the present invention will become apparent from the following description of preferred embodiments with reference to the drawings attached.

### Brief Description of the Drawings

Fig. 1 illustrates how a method and devices in accordance with invention may be practiced to conduct a game, such as a space vehicle races;
Fig.2 illustrates how a method and devices in accordance with the invention can be implemented using accidental hitting game fields on a surface of a space vehicle by movable objects.

### Description of Preferred Embodiments

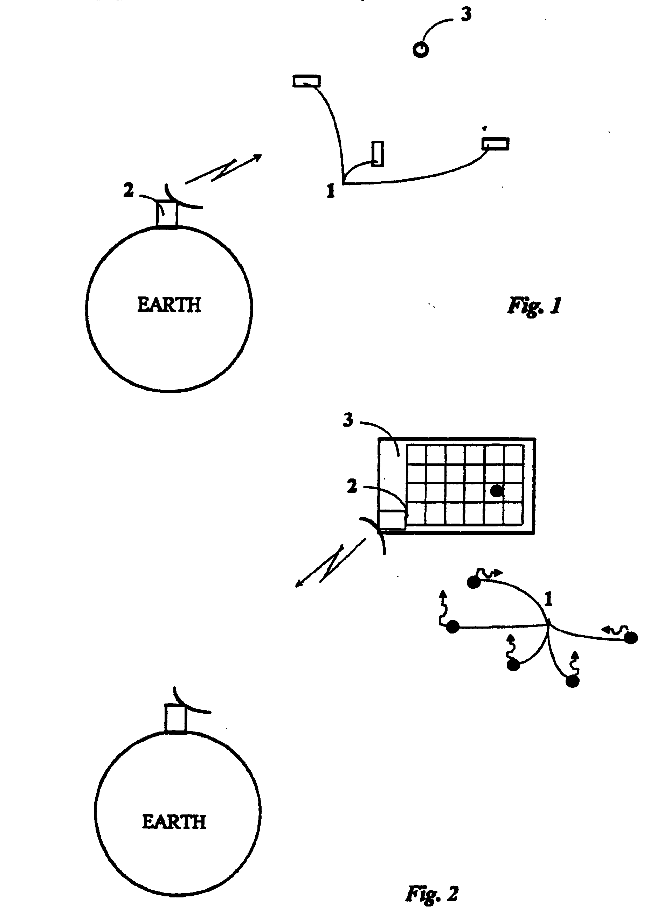

Referring now to Figs. 1 and 2, a method for playing a game involves accepting bets on a registration of a game event performed by game elements 1 which are capable of moving in space, registering a game event occurrence using a facility 2 by a spatial position of the game elements 1 relative to at least one game event assessment means 3 located in the same space, and allotting a payoff. The game elements 1 and the means 3 are located in cosmic space outside the Earth, while a game event occurrence is registered by the facility 2 on the Earth.

There are various embodiments of the above method.

For instance, the game may be conducted in the following manner.

Game organizers conduct at least one game. The game is a competition (Fig. 1) among game elements 1 which are space vehicles. Prior to the game, i.e. before conducting the competition or not so long before its end (time for wagering is defined by the game organizers based on preliminary established or published rules) every participant in the game makes at least one bet on at least on one of the competing game elements 1, i.e. on at least one space vehicle participating in the competition. When bets are accepted from the game participants, the space vehicles may be located on the Earth and prepared to be launched, or already placed in orbit. Every space vehicle may have an orbit of its own like tracks for sprinting sportsmen. The organizers allot payoffs to the game participants on the basis of the outcome of the game (a competitions or competitions) taking into account the bets made. In this case, the game organizers first determine temporal, and/or speed, and/or coordinate, and/or precision characteristics of a game element 1, every space vehicle, relative to at least one game event assessment means 3, a man-made or natural space object, and then compare the above characteristics of all space vehicles. The payoffs to the game participants are determined by the game organizers by the comparison results of the space vehicle characteristics. The game event occurrence results are assessed and transmitted by a facility 2 which may be located on the Earth or in cosmic space, in the latter case game event occurrence data must be obligatory transmitted to the Earth.

The game event assessment means 3 may by, for instance, space objects of technogenic origin, such as a satellite or space waste. The at least one game event assessment means 3 may be a space object of natural origin, such as a planet or small space objects.

The temporal characteristics may be, for instance, the time of approaching the game event assessment means 3 by the game elements 1, or the time of capturing the means 3, or the time of its defeat.

The speed characteristics may be, for instance, the speed of approaching at least one means 3 by the game elements 1, or the speed at which a game element 1, a space vehicle, will capture or hit the means 3, a space object.

The coordinate characteristics may be, for instance, coordinates of game elements 1 relative to at least one space object.

The precision characteristics may be, for instance, full or partial matching of a position of the game elements 1 to predetermined game conditions.

A preferred embodiment of competitions to implement a method in accordance with the invention is racing.

Competitors in the racing are game elements 1, space vehicles of similar type equipped with the following systems:
in-orbit stabilization and maneuvering systems,
independent rendezvous systems to approach space objects, for instance, the game event assessment means 3, such as a satellite,
measurement systems for measuring parameters of a relative movement with the means 3, a space object or a target (for instance, a satellite to approach),
and other systems, such as:
a system for capturing and hauling the means 3, a satellite (or another space object), or
a system for packaging a satellite into a reliable envelope to protect it against damage in the space flight, or another package to reduce pollution of cosmic space from its use. Therefore, a game conducted in accordance with the invention ensures clearing cosmic space of waste.

When conducting the game, the game event assessment means 3 (a space object, such as satellite or satellites) is selected to be is a race target (a place to be approached by a space vehicle while racing), a "track" being at least a part of the path of at least one game element 1 of a game participant (a space vehicle), for instance, a transport space vehicle and/or a space-to-space projectile on its path from a starting point on the Earth to the rendezvous with a predetermined target in orbit, the game event assessment means 3 (a space object). Before the game the game participants make bets on at least one game element 1 (a space vehicle), play, for instance, randomly select the game event assessment means 3, a race target (a planet or technogenic object) for every participant registered, define its position on the race track, and specify or approve some characteristics of the space vehicle which will define its priority, i.e. specify the criteria of a game event occurrence and registration of the race outcome (time, distance, leadership, collection of a predetermined, for instance, maximum number of scores given for standard actions, e.g. for bypassing predetermined marks at a predetermined distance).

Preparation to conducting the races includes, in particular, such activities as mounting a game element 1, a space vehicle (SV), on a carrier rocket (CR), launching and placing in an orbit in cosmic space.

Data to be processed (characteristics compared) is transmitted in real time by a facility 2, a command-and-measuring system, to an information collection and processing centre, and to a commercial center, both having as a basic objective to display the measurement results in an fair and reliable manner (to provide a verification in future). The display means may be television or radio receivers, computer monitors, etc. The race outcome data may be additionally recorded on a special protected device so that to use it in future for verification and validation of the race outcome if it is challenged.

Depending on the selected characteristics of SVs, competitions may be conducted for guessing the fact of approaching the means 3 by a game element 1 within a predetermined time period, or the first approach of the target, the means 3, by one of a plurality of SVs. Situation in orbit may be displayed to the game participants.

On the Earth, on the basis of the data observed, space objects are selected to be race targets, for instance, big fragments of a carrier rocket or used space vehicles, and game elements 1, racing space vehicles (RSVs), are launched into orbit. An RSV performs a flight, and a facility 2 provided with a space object movement detection device registers the fact of meeting the competition rules, event signals being stored and transmitted, for instance, over a radio channel, to display apparatuses disposed on the Earth at the places where the game participants/spectators are located. Event data are used in the game, and, as the events accumulate with time, in operations aimed at clearing the cosmic space of big and hazardous objects.

The advisability of using the big fragments of a carrier rocket or used space vehicles as the game event assessment means 3 (a race target) may be justified, in particular, by a number of fragments and used space objects. By the end of 1998, the catalogs of the Russia and USA space monitoring centers recorded more than 8,500 objects of more than 20 cm in size. Altogether, there are about 800,000 space particles (SPs) with a diameter of 1 cm in satellite orbits from the atmosphere boundary (about 120 km) to the height of 1600 km.

Therefore, the method of conducting racing events in accordance with the invention, which is essentially a sort of a space totalizator, involves, in particular, registering prior to the game conducted by the organizers in cosmic space by participants in the race (game participants) at least one position of a game participant, i.e. making at least one bet on game elements 1, such as racing space vehicle (RSVs); assessing, while conducting the game, actions of the game elements 1 (RSVs) aimed at approaching a race target with a minimum number of penalty points charged for breaking the race rules. In the game the organizers use at least two game elements 1 (RSVs) which are in flight and interact with at least one game event assessment means 3, such as a target space object (TSO), measure orbits of all of the means 3 performing flight in cosmic space at the beginning of the race, and select at least one means 3 from their total number. Then, the game organizers define a position of each of the game elements 1 (RSVs) at the beginning of the race, determine the race start time, launch the game elements 1 (RSVs) on carrier rockets into an initial orbit, each of the game elements 1 (RSVs) maneuvering to reach the race start point within a predetermined time and approaching the race start point, detect the fact of approaching the race start point by every game element 1 (RSV), signal the race start and define the race start time of every game element 1 (RSV). Characteristics of the game elements 1 (RSVs) to be compared may include:
approaching the position of the game event assessment means (TSO) by a game element 1 (RSV) within a minimum time,
passing by a game element 1 (RSV) near the means 3 (TSO) at a predetermined distance,
establishing by a game element 1 (RSV) a mechanical coupling with the means 3 (TSO),
hauling the means 3 (TSO) in a predetermined direction,
changing the orbit of the means 3 (TSO) within a minimum time at a predetermined amount,
disconnecting a mechanical coupling,
determining the time of: starting the race, or approaching the means 3 (TSO), or establishing a mechanical coupling with the means 3 (TSO), or withdrawing the means 3 (TSO) from the orbit, or approaching by the means 3 (TSO) the orbit modified at a predetermined amount, or disconnecting the mechanical coupling.

The determined time is used to define for each game element 1 (RSV) the total time spent for operations aimed at achieving the race targets, and to determine a game element 1 (RSV) having, for instance, a minimum time to approach the race target, the game event assessment means 3.

Therefore, in one embodiment of the apparatus (Fig.1), the game elements 1 and the game event assessment means 3 are located in cosmic space, the game elements 1 being space vehicles, the means 3 being an object of natural origin, and the game event occurrence registration facility 2 being capable of obtaining game event occurrence data in cosmic space outside the Earth and displaying the data on the Earth.

In another embodiment (Fig.1) the game elements 1 and the game event assessment means 3 are located in cosmic space, the game elements 1 being space vehicles, and the game event assessment means 3 being a technogenic object, for instance, one of space vehicles or space waste, and the game event occurrence registration facility 2 being capable of recording a game event occurrence in cosmic space outside the Earth and displaying the same on the Earth.

In the practice of a method embodiment in which the game elements 1 occasionally hit a surface, the method (Fig.2) includes accepting bets on a registration of a game event performed by game elements 1 which are capable of moving in space, registering a game event occurrence using a facility 2 by a spatial position of the movable game elements 1 relative to at least one game event assessment means 3 located in the same space, and allotting a payoff. The game elements 1 and the game event assessment means 3 are also located in cosmic space outside the Earth, while the registering of a game event occurrence by the facility 2 is effected on the Earth.

Prior to the game conducted in cosmic space, game participants register, by making bets, at least one game field on the means 3, i.e. spatial fields on its surface. Winning positions are determined by occasionally hitting them by the game elements 1. The game elements 1 which determine winning positions on the game field are space objects of artificial, for instance, technogenic, and/or natural origin, for instance, small space objects, meteorite particles. The game event assessment means 3 is a part of a surface on a space vehicle (SV) or its entire surface, or its anti-meteorite shield. It may be also a surface of a specially designed SV for conducting the game. The game event assessment means 3 may be a natural space object, for instance, a part of a surface of a planet or, for instance, the Moon.

The facility 2 is adapted to register hitting the game fields on the means 3 by game elements 1 of artificial, for instance, technogenic, and/or natural origin. The game elements 1 hitting the means 3 may be "space waste" (i.e. small space objects, meteorite particles, etc.) of natural or artificial origin which occur in space in a number sufficient to conduct the game within a predetermined time. The outcome is defined by a number of game event occurrences, i.e. hitting the game fields by a fixed number of space particles (SPs). An SV surface comprising various conditional or defined areas, on which the game results are detected, is used as a common game field. Dimensions of the common surface and the game fields are selected prior to the beginning of the game on the basis of the game rules and characteristics of occasional process sources (for instance, a density of a space waste stream, meteorite particles, etc.).

A space vehicle (SV) is provided with facility 2 which may be a panel with hit detection instruments, such as, for instance, particle detectors to sense the facts of interaction between the panel and particles moving at appropriate relative speeds. The particle detectors has a threshold response level so that to eliminate responses to hits by particles separated from the SV per se, for instance, when placing it into orbit.

The facility 2 with a system for registering an occasional game event result may be any device which provides registering a fact of interaction between a game element 1 and the SV surface. For instance, the use may be made of the panel with space particle detectors employed in the project of "Vega" interplanetary SV in flight to Halley's Comet, or a meteorite particle detector mounted on USA satellites "Pegas 1, 2, 3", LDEF, the data obtained being transmitted to the Earth. Such surfaces on the assessment game event means 3 are simple to design and fabricate and may be implemented on the base of panels designed for space power generating installations.

The detectors (SP) per se may be instruments used in the international Venus-Halley project (〈〈Foton〉〉, 〈〈Dusma〉〉, SP-2). To provide a start pulse required to register an SP by the instruments, physical mechanisms of inducing a charge and current in a film capacitor, film layer breakdown burst are employed.

Making the SP registration instruments in the form film capacitors ensures almost instantaneous detection of particles which break down a film of any dimension. Employed in this case is the principle of capacitor discharge through the plasma which is generated as the result of evaporation of a film and SP material at the film breakdown and fast dissipates in the cosmic space environment. As luminosity (integral impact energy), temperature and spectral characteristics of the plasma are being changed, the participle characteristics can be, in principle, quickly analyzed. Moreover, the acoustic pulse energy provides the possibility to determine the kinetic energy of particles. Thus, SP paths can be defined by locations of breakdown points. Therefore, several independent measurement systems can be used to monitor a game event occurrence, including displaying both the processes occurring when the particles hit the detector, and impact traces.

To detect a game event, a working surface of the game event assessment means 3 (SV) is divided into game fields, separate regions (sectors or squares). Hitting the game fields by the game elements 1 (SV) is a game event occurrence which defines the game outcome. Hitting data is stored in a memory unit on board the SV and transmitted over common telemetry channels to the Earth where, after being processed, the data is displayed at the competitors' place, for instance, in a game room or on a tourist ship. The hit display means may be television or radio receivers, computer monitors, etc. The system for displaying the game progress and outcome is located at the competitor's place and adapted to provide visual demonstration, entertainment and fairness of the game. The system can be a conventional display system comprising screens and projectors.

Preparation to conducting the game may be accomplished in the following manner.

Prior to conducting the game, organizers provide and prepare for launching game event assessment means 3, a space vehicle (SV) having a surface equipped with facility 2, panels separated into game fields, for instance, into 38 equally sized fields numbered 1, 2,...38. The means 3 (SV) is put on a carrier rocket and launched into an orbit which will provide a predetermined existence time (for instance, one year). Once the means 3 (SV) has been placed into the orbit, the operation of the space vehicle and terrestrial systems are tested and the game start is announced. Spatial regions with maximum concentration of game elements 1, for instance, small particles originated from explosion of a carrier rocket or other (SPs), can be preliminary selected on the Earth on the basis of survey data, so that to provide the longest residence of the game event assessment means 3 in the region with maximum concentration of space objects, where the means 3 is in flight. Altogether there are about 80,000,000 SPs of 1 mm in diameter, about 10,000,000,000 SPs of 0.1 mm in diameter, and about 100,000,000,000,000 SPs of 0.0001 mm in diameter, the smallest to damage detectors of the contemporary space vehicles, in orbits of artificial satellites from the atmosphere boundary to the height of 1600 km. The number of such "waste particles" is evergrowing about twice every 20 years, this placing in danger the future space flights.

The probability of hitting a surface having the area of 1000 m² with the orbital altitude of 450 km within a year is:
0.015 by SPs of more than 1 cm in diameter;
at least one hit by particles of 1 mm in diameter;
about 150 hits by particles of more then 0.1 mm in diameter;
about 100,000 hits a year or 11.4 hits an hour by particles of more than 0.000 1 mm in diameter, the smallest to damage the detectors.

By way of example, the USA cylinder-shaped LDEF satellite of 10 m in size and 3 m in diameter during 69 months, from April 1984 to January 1990, has got 32000 breakdowns, this giving 185,000 hits a year per the discussed rated area of 1000 m². Thus, a conventional SV surface is quite sufficient to conduct the game. The average rate of SP collisions with a target is 122,200 m/c, this ensuring the distinction of "natural" particles over any simulations of SV producers.

The facility 2 registers hitting the game event assessment means 3 and sections of its game field by the game elements 1 (SP), game event occurrence signals being are stored and transmitted, for instance, over a radio channel, to display means located on the Earth. Being accumulated, the obtained game event occurrence data may be also used in scientific works directed at investigation of the surrounding cosmic space.

Upon announcement of the game, participants make bets on at least one position on the game field of the game event assessment means 3. Upon collecting the bets, the game organizers play the winning positions by enabling the facility 2 on the means 3 to detect hitting the game areas (panels) of the game fields by the game elements 1 (SPs). Data of hitting the game event assessment means (SV) by the game elements 1 (SPs) is relayed as measurement signals and television frames representing hitting the game fields by the game elements to the Earth, thus, the game data may be verified by competitors and, if necessary, by independent experts.

The game rules may, for instance, provide for conducting the game from the registration beginning to the time of the first hitting the means 3 by a game element 1 (SP). If several game fields on the game event assessment means (SV) are hit by game elements 1 (SP) simultaneously, the winner can be a particle with the greatest mechanical energy, and if all particles have the same energy, the payoff may be given, in an increased amount, to all competitors who placed bets on the hit game fields.

As the hits of the game elements 1 (SP) occur in uniform and continuous fashion, and the means 3 (SV) operates within a predetermined time (for instance, a year), the next game can be consequently conducted upon termination of the first game.

Owing to the fact that the game is conducted with game elements 1 of artificial, for instance, technogenic, and/or natural origin, such as, small space objects, meteorite particles, the game registration facility 2 should be installed on the external surface of the means 3 (SV) and adapted to detect a game event occurrence in cosmic space and transmit it to the Earth.

The facility 2 must meet the following requirements.

Used as a game field are panels which are part of a surface of the game event assessment means 3 (SV), the panels being specially oriented in space (for instance, all panels are in parallel with the orbit plane) and having the same characteristics of the probability of being hit by the game elements 1 (SPs), including equal areas, the absence or equal degree of shadowing by structure components, thickness, sensitivity of sensors, response time and the recovery ability. If required, nonoperable panels may be replaced by spare panels. The spare panels are introduced in the game instead of those failed.

Means for registration of hitting the means 3 by the game elements 1 should be adapted to register hits by space objects of artificial, for instance, technogenic origin, and/or natural origin, and can be configured as sensors based on various physical principles, with subsequent integration and reliable recording on non-rewritable media (for instance, photographic recording).

A dimension of a game field surface is selected prior to conducting the game by selecting an area, thickness of panels, sensitivity of sensors. The facility 2 is adjusted to such a minimum dimension of a particle registered, for which a game event occurrence (panel breakdown) takes place within an acceptable time, for instance, every five minutes. The equipment is adjusted to maximum participle velocities possible (for instance, 19 km/second for SPs in a satellite orbit), this eliminating the risk of passing fast particles undetected.

The detectors should have a threshold level to eliminate responses to hits by particles which separate while launching the SV and exhibit a lower relative velocity (for instance, less than 100 i/s) due to the laws of celestial mechanics.

Employed in detectors (the aforementioned "Foton", "Dusma", SP-2 instruments) may be the following factors:
Processes of inducing a charge and current in a film capacitor when the material evaporates being hit by an SP, ionization of the panel owing to thermal energy liberation at impact and electrical breakdown between plates of a capacitor which is substantially the game field surface;
When the capacitor plates are short-circuited inside a crater by metal droplets, the bridges are fused by a short-time current pulse from an SV on-board power source.

At a high likelihood, total damages (craters) within a predetermined existence time will not substantially reduce the panel area, and, moreover, due to uniform flow of the game elements 1 (SP) the area of all panels is being varied, in average, at the same amount;

A burst caused by film breakdown is detected by spectrometers, this allowing to differentiate it from the optics exposure to the Sun, the Moon and stars, as well as to television cameras, so that a hit place of a game element 1 can be located. A chemistry of fast particles which generate a plasma cloud at film breakdown can be defined by spectral methods;

Acoustic sensors are located over a perimeter of every panel (over the game field perimeter), and the kinetic energy of particles can be determined by the acoustic pulse energy. Thus, location data of breakdown points is obtained by a pulse arrival delay;

Using film capacitors as the sensors allows the substantially instantaneous registration of particles which breakdown a film of any size. In this case the use is made of a principle of capacitor discharge through the plasma generated as the result of evaporation of a film and SP material at the instant of film breakdown.

Therefore, used as the facility 2 may be several independent measurement systems, including visual demonstration of the processes.

The data is transmitted to an information collecting and processing center and a commercial center, both having a principle objective to reliably display the game results (which can be verified in future ), in real time, as in case with SV races. Depending on the hit intensity, contests may be conducted for guessing the facts of hitting the game elements 1 within a predetermined time, or defeating the predetermined game fields on the means 3.

The situation in orbit of the means 3 (SV) may be displayed to the competitors to show:
the presence of SVs, listed in the catalogs, proximate to the means 3;
forecasted density of space waste proximate to the means 3,
forecasted meteor streams, the meteor entrance into the atmosphere being demonstrated by television;
slowed demonstration of the record showing the collision of game elements 1 (SPs) with the means 3 and its target.

Adjustment of the facility 2 (SV) to a selected total size of the game field panel, its orientation in space and detector sensitivity may provide a specified density of the accidental event flow.

Thus, in another embodiment of an apparatus for implementing the method in accordance with the invention, the game elements 1 and the means 3 are located in cosmic space, the game elements 1 are movable objects randomly moving in cosmic space, the means 3 is an external surface of a space vehicle, the game event occurrence registration facility 2 is mounted on the external surface of the space vehicle and adapted to detect a game event occurrence in cosmic space outside the Earth and transmit information of the game event occurrence to the Earth.

The use in the present invention of natural accidental processes ensures that they will be unbiased, the main objective of the game organizer being to provide recording data of these processes so that to monitor the game event occurrence results.

Likewise the case of conducting races of space vehicles (SVs), at the bombardment of a target by space particles all of the aforementioned processes meet the objectives of the space game, in particular:
they are unpredictable, i.e. there is no possibility to preliminary predict the outcome of the racing events using some technical means;
they can be monitored, i.e. it is possible to observe them and measure and determine the results, wherein both the game progress and the position of every game element 1 relative to the means 3 can be monitored;
they are reasonably fast, i.e. the time of waiting the results is finite;
they are fair, i.e. competitors and independent experts are able to verify a game event occurrence and the outcome achieved, while the game organizers have no possibility to misrepresent or conceal the game outcome from the verification.

The games in accordance with the invention provide both the attainment of the purpose of the game as such, and the additional benefit: along with the game process as such a competitor is able to substantially broaden his or her knowledge in the field of the occasional natural processes forming the basis of the game being conducted.

### Industrial Applicability

A method for playing a space game and a devices for realising this method in accordance with the invention can be employed in improving and educating technical games.

## Claims

1. A method for playing a space game including the steps of:
accepting bets on a registration of a game event performed by game elements which are capable of moving in space;
registering a game event occurrence using a facility by a spatial position of the game elements relative to at least one game event assessment means located in the same space, and
allotting a payoff,
wherein the game elements and the game event assessment means are disposed in cosmic space outside the Earth, said registering of a game event occurrence by a facility being effected on the Earth.

2. The method according to claim 1 wherein said game elements are space vehicles having various technical characteristics.

3. The method according to claim 2 wherein said registering of a game event occurrence is effected by a space vehicle which is the fastest to reach a position of the game event assessment means.

4. The method according to claim 3 wherein said game event assessment means is a technogenic object relating to space waste, said technogenic object being captured on reaching its position.

5. The method according to claim 2 wherein said registering of a game event occurrence is effected by a space vehicle which has gone the longest distance to the game event assessment device.

6. The method according to claim 2 wherein said registering of a game event occurrence is effected by a space vehicle which has gone at the shortest distance from the game event assessment means.

7. The method according to claim 2 wherein said game event assessment means is one of the solar system planets.

8. The method according to claim 2 wherein said game event assessment means is a space vehicle launched prior to said accepting of bets on a registration of a game event.

9. The method according to claim 1 wherein said game event assessment means is an external surface of a space vehicle, said surface being divided into game fields, the game elements being movable objects which are randomly moving in cosmic space, and said registering of a game event occurrence being effected when a movable object hits a game field.

10. The method according to claim 9 wherein said movable objects are meteorite particles.

11. The method according to claim 9 wherein said movable objects are particles of technogenic origin, such as space waste.

12. A device for playing a space game, comprising:
game elements capable of moving in space;
game event assessment means for assessing a spatial position of the game elements relative to said game event assessment means, disposed in the same space, and
a game event occurrence registration facility,
wherein the game elements and the game event assessment means are located in cosmic space, the game elements being space vehicles, the game event assessment means being an object of natural origin, and the game event occurrence registration facility being adapted to detect a game event occurrence in cosmic space outside the Earth and display the game event occurrence on the Earth.

13. A device for playing a space game, comprising:
game elements capable of moving in space,
game event assessment means for assessing a spatial position of the game elements relative to said game event assessment means, disposed in the same space, and
a game event occurrence registration facility,
wherein the game elements and the game event assessment means are located in cosmic space, the game elements being space vehicles, the game event assessment means being a technogenic object, and the game event occurrence registration facility being adapted to detect a game event occurrence in cosmic space outside the Earth and display the game event occurrence on the Earth.

14. The device according to claim 13 wherein said technogenic object is a space vehicle.

15. The device according to claim 13 wherein said technogenic object is space waste, the game element being provided with means for capturing the space waste.

16. A device for playing a space game, comprising:
game elements capable of randomly moving in space,
game event assessment means for assessing a spatial position of the game elements on a surface of the game event assessment means, said surface being divided into game fields, and
a game event occurrence registration facility for registering a game event occurrence, such as hitting a game field by a game element,
wherein the game elements and the game event assessment means are located in cosmic space, the game elements being movable objects randomly moving in cosmic space, the game event assessment means being an external surface of a space vehicle, the game event occurrence registration facility being mounted on an external surface of the space vehicle and adapted to detect a game event occurrence in cosmic space outside the Earth and transmit game event occurrence data to the Earth.
